(19) **Europäisches Patentamt / European Patent Office / Office européen des brevets**

(11) **EP 2 289 147 B1**

(12) **EUROPEAN PATENT SPECIFICATION**

(45) Date of publication and mention of the grant of the patent:
**06.12.2017 Bulletin 2017/49**

(21) Application number: **09755147.7**

(22) Date of filing: **20.05.2009**

(51) Int Cl.:
*H02J 7/14* (2006.01)    *B60R 16/033* (2006.01)
*H02J 7/00* (2006.01)    *B60L 11/18* (2006.01)

(86) International application number:
**PCT/SE2009/050584**

(87) International publication number:
**WO 2009/145709 (03.12.2009 Gazette 2009/49)**

(54) **CONTROL OF BATTERY BALANCE**

STEUERUNG DES BATTERIEAUSGLEICHS

COMMANDE D'ÉQUILIBRAGE DE BATTERIE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.05.2008 SE 0801248**

(43) Date of publication of application:
**02.03.2011 Bulletin 2011/09**

(73) Proprietor: **Scania CV AB (publ)**
**151 87 Södertälje (SE)**

(72) Inventors:
• **DREHER, Holger**
**SE-151 55 Södertälje (SE)**
• **LEDFELT, Gunnar**
**SE-155 91 Nykvarn (SE)**

(74) Representative: **Scania CV AB**
**Patents, GP 117kv**
**151 87 Södertälje (SE)**

(56) References cited:
FR-A1- 2 860 353     JP-A- 2004 194 410
US-A- 4 967 136     US-A1- 2004 130 214
US-A1- 2005 151 509     US-B1- 6 271 645

## Description

## Field of the invention

The present invention relates to a method for battery unbalance mitigation in a voltage conversion system and a voltage conversion system implementing the method. The present invention also relates a computer program and a computer program product implementing the method, and to a vehicle including the voltage conversion system.

## Related art and background of the invention

In many vehicles, such as cars, trucks, tractors and the like, a 24 volt Direct Current (DC) power system is used as a standard power system. The reason for having a 24 volt power system in the vehicles is that such high voltages (24 volt) are often needed for operating some parts of the vehicle, such as a starter motor. The 24 volt voltage is often achieved by connecting two 12 volt batteries in series with each other.

However, a supply of 12 volt is often also needed in the vehicles, since a lot of the electrical equipment in the vehicles typically is 12 volt electronic equipment. For instance, vehicle electronic equipment, such as lamps, exhaust gas purification systems, and the like; safety arrangements, such as speed and distance radars, Lane Departure Warning (LDW) systems, and the like; radio systems, such as stereo apparatus, communication radios, and the like; are often constructed for a voltage of 12 volt. One reason for using such 12 volt electronic equipment is that the fast development and large production numbers of electronic equipment in the private car industry, which typically uses a 12 volt system, has had as result that electronic equipment for 12 volt systems is less expensive and is available on the market earlier than corresponding electronic equipment for 24 volt systems.

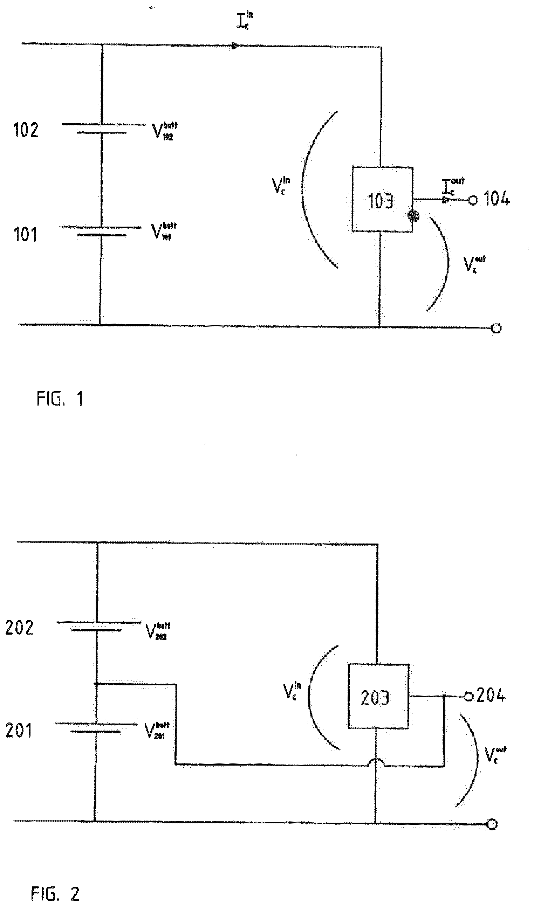

Therefore, vehicles having a 24 volt power system must also provide for a 12 volt power supply. This is generally achieved by the use of a 12 volt converter, more specifically by the use of a 24/12V converter. A common prior art circuit including such a 24/12V converter is schematically shown in figure 1. In figure 1, a first and a second battery, 101, 102, each having a voltage of 12 volt, V101*batt*, V102*batt*, are connected in series with each other in order to achieve a total voltage of 24 volt. A vehicle generator and the 24 volt loads, such as the starter motor, are not shown in this schematic drawing. If they had been present in the drawing, they would have been located to the left of the batteries.

Further, a 24/12V converter 103 is connected over the series connected first and second battery 101, 102 and thus has a converter input voltage *Vcin* of 24 volt and a converter input current *Icin.* The 24/12V converter converts the 24 volt converter input voltage *Vcin* to a 12 volt converter output voltage *Vcout* and a converter output current *Icout,* which are provided on the circuit output 104. Here, the converter output current is twice the converter input current, *Icout* = 2 * *Icin* (when losses are neglected), since the converter output voltage is half of the converter input voltage, $Vcout = \dfrac{1}{2} Vcin$.

US -6,271,645 discloses a voltage based method and circuit for balancing of energy levels between battery groups within a battery pack.

In the prior art circuit shown in figure 1, the maximum current that can be output from the circuit, here being identical to the converter output current *Icout,* is limited to the current the power electronics of the 24/12V converter can provide. Typically, the converter output current *Icout* is limited to approximately 20 ampere. This limitation of the converter output current *Icout* results in a 12 volt circuit output voltage having a poor quality for high currents, e.g. being deteriorated by ripple.

Further, so called equalizers are also known from the prior art, such as the one shown in prior art document US 4 479 083. In such equalizer circuits, a higher circuit output current than the current being provided by the 24/12V converter can be achieved, when being needed, by also leading current from one of the batteries to the output of the circuit.

A general equalizer circuit is shown schematically in figure 2. Here, a first and a second battery 201, 202, each having a voltage of 12 volt V201*batt,* V202*batt*, are connected in series with each other, thereby providing a 24 volt voltage. A 24/12V converter 203 is connected over the first and second series connected batteries 201, 202 and thus has a converter input voltage of 24 volt and a converter input current. The 24/12V converter converts the 24 volt converter input voltage to a 12 volt converter output voltage and provides a converter output current. An output of the circuit 204 is also connected to the first battery 201. In the equalizer circuit in figure 2, if the converter output current does not deliver enough current, a current is also taken from the first battery 201. Thus, if a required total output current for the equalizer circuit, i.e. the output current resulting at the output 204, is higher than a maximal possible output current for the converter, current is also taken from the first battery 201 to compensate for the shortcomings of the converter 203.

In prior art equalizers, such as the one described in US 4 479 083, the function of the equalizer is controlled by regulating the voltage over the first and the second 12 volt batteries. When, for illustrative purposes, applying such a voltage related method for function control of the equalizer to the schematic circuit in figure 2, the voltages of the first and the second battery would here be controlled by a voltage restraint being defined by:

V 201*batt* = V202*batt*. Also, the voltage of the generator *Vgen* is equal to the sum of the voltages of the two batteries 201, 202, i.e. *Vgen* = V201*batt* + V202*batt*.

In equalizers, an unbalance between the charging levels of the first and the second battery 201, 202 may occur. Then, by utilizing the restraint $V201batt = V202batt$ for the first and the second battery 201, 202, a current flow is created, which charges the first and the second battery, respectively, until they have balanced charging levels again. Thus, in such prior art voltage level related solutions, the batteries 201, 202 are charged to balanced charging levels based on differences in voltage levels for the batteries $V201batt, V202batt$.

The use of a voltage level based charging control, according to the prior art, has a number of drawbacks being related to the basic battery characteristics of the batteries themselves. In general, the voltage of a battery is not momentarily adjustable, since it takes a period of time for the battery to reach its open circuit voltage. Thus, a battery has a relaxation time. Also, it is difficult to know in beforehand how much the voltage of a battery will decrease when loads are connected to it, since this voltage also depends on a number of usually unknown parameters, such as the age of the battery, the environmental temperature, and the like. The result of the voltage level based charging process is therefore unpredictable.

Further, when charging a battery by applying an essentially constant charging voltage to the battery, which is the case in the prior art voltage level based solutions, charging of the battery becomes very slow when there is a relatively small difference in amplitude between the charging voltage and the actual voltage of the battery. This is due to the fact that the amplitude of a charging current, which flows through the battery to charge it, then depends on the size of the difference between the charging voltage and the voltage of the battery. If this difference is small, the charging current is small and the charging process becomes slow. Thus, the prior art solutions for creating charging balance between the first and the second battery of an equalizer, by the use of a voltage based charging control, are slow, inefficient, and unpredictable.

**Aim and most important features of the invention**

It is an object of the present invention to provide a method and a voltage conversion system for unbalance mitigation that solves the above stated problems.
The present invention aims to provide a more efficient, predictable and reliable method and voltage conversion system for unbalance mitigation than the ones known in the background art.
The object is achieved by a method for battery unbalance mitigation according to the characterizing portion of claim 1.
The object is also achieved by a voltage conversion system according to the characterizing portion of claim 13, i.e. by a voltage conversion system implementing the method of the present invention.
The object is also achieved by a computer program and a computer program product implementing the method of the invention.

The method and the voltage conversion system according to the present invention are characterized in that the whole procedure of battery unbalance detection and battery charging control is current based. In particular, the relationships between the voltage conversion system output current $Isysout$, and the first and the second charging current $Ib1$, $Ib2$ are utilized to determine if a battery unbalance is present and to determine the first and the second charging current $Ib1$, $Ib2$ to be applied to the first and the second battery, respectively. A battery balance is then restored by applying a first and a second charging current $Ib1$, $Ib2$ to the first and the second battery, respectively, where each of the first and the second charging current $Ib1$, $Ib2$ is different from the other.

The current based unbalance detection and battery charging control, according to the present invention, have a number of advantages. In particular, to determine a battery unbalance based on the voltage conversion system output current $Isysout$ results in a correct and efficient detection of battery unbalance. To charge the first and the second batteries by applying a certain first and certain second charging current to the first and the second battery, respectively, according to the invention, balances the batteries in a predictable and quick manner.

According to an embodiment of the present invention, the converter in the voltage conversion system is arranged for converting a first voltage to a second voltage, where the first and the second voltage have approximately the same amplitude. Here, battery unbalance is determined to be present if the amplitude of the voltage conversion system output current $Isysout$ is higher than approximately twice an amplitude of a maximal converter output current $Ic(max)out$ for the converter, i.e. $Isysout > \alpha * Ic(max)out$, where $\alpha \approx 2$.

According to an embodiment of the present invention, the first and the second voltage are here approximately 12 volt.

According to an embodiment of the present invention, the converter in the voltage conversion system is arranged for converting a first voltage to a second voltage, where the first voltage has approximately twice the amplitude of the second voltage. According to this embodiment, the battery unbalance is determined to be present if the amplitude of the voltage conversion system output current $Isysout$ is higher than approximately an amplitude of a maximal converter output current $Ic(max)out$ for the converter, i.e. $Isysout > \alpha * Ic(max)out$, where $\alpha \approx 1$.

According to an embodiment of the present invention, the first and the second voltage is here approximately 24 volt and approximately 12 volt, respectively.

The analysis of the voltage conversion system output current $Isysout$ and the comparison of this current with the maximal converter output current $Ic(max)out$, according to these two embodiments of the present invention, achieves an exact and efficient detection of battery unbalance.

According to an embodiment of the present invention, the amplitude of at least one of the first and the second charging current $Ib1$, $Ib2$ to be used for charging the first and the second battery, respectively, from a time instant on, is determined based on an amplitude of the first and the second charging current $Ib1$, $Ib2$, which has been used for charging the first and the second battery, respectively, during a time period of battery unbalance. In particular, an integral over the time period of battery unbalance is calculated for a difference in amplitude between the first and the second charging current $Ib1$, $Ib2$.

To be able to exactly determine at least one of the first and the second charging currents $Ib1$, $Ib2$, as is possible by this embodiment of the present invention, has the advantage that battery balance can be restored quickly and exactly.

According to an embodiment of the present invention, the currents being used for charging the first and the second battery are controlled to have an essentially constant current level. A very efficient, fast, and predictable charging of the batteries is thereby achieved.

Detailed exemplary embodiments and advantages of the method for unbalance mitigation according to the invention and a voltage conversion system implementing the method will now be described with reference to the appended drawings illustrating some preferred embodiments.

**Brief description of the drawings**

Fig. 1 shows a prior art voltage conversion circuit.
Fig. 2 shows a prior art voltage equalizer circuit.
Figs. 3a-b show voltage conversion systems according to the present invention.
Fig. 4 shows a flow diagram for the method of the present invention.

**Detailed description of preferred embodiments**

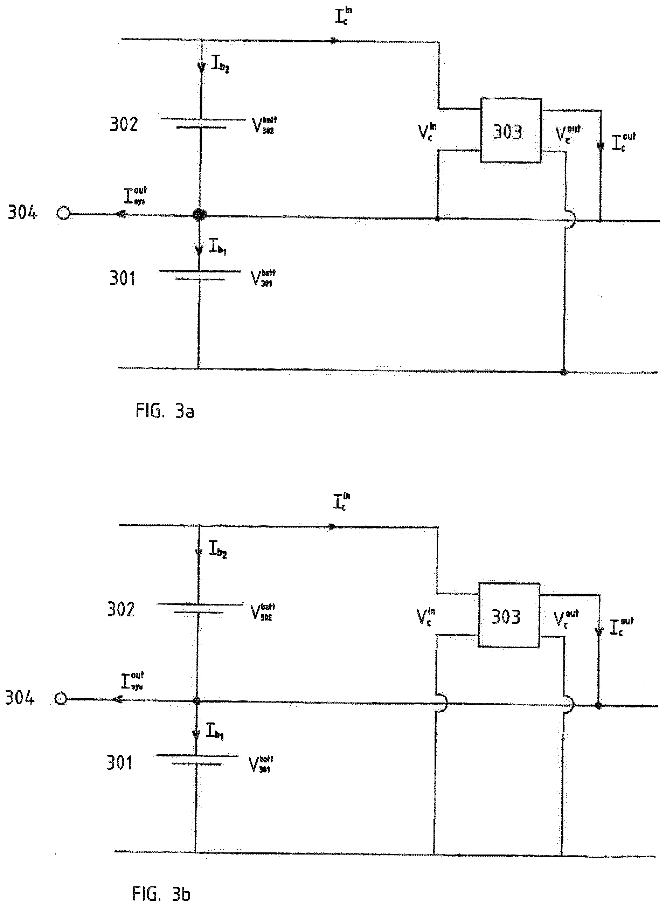

Figures 3a and 3b each schematically shows a voltage conversion system, such as a DC conversion system, in form of an equalizer circuit, according to an embodiment of the present invention. In figures 3a and 3b, corresponding parts have been given the same reference numbers.

In the embodiment of the voltage conversion system shown in figure 3a, a first and a second 12 volt battery 301, 302, having a first and second voltage $V301batt$, $V302batt$, are connected in series with each other, thereby providing a 24 volt voltage. An input of a converter 303 is here connected over the second battery 302. The converter 303 is thus a 12/12V converter and has a converter input voltage $Vcin$ of 12 volt and a converter input current $Icin$. The 12/12V converter produces a converter output voltage $Vcout$, having a 12 volt voltage level and a converter output current $Icout$. A voltage conversion system output 304 is connected to a point between the first battery 301 and the second battery 302, and also to an output of the converter 303, thereby producing a voltage conversion system output current $Isysout$, being composed of the converter output current $Icout$ and a current from the first battery $Ibattout$, i.e. $Isysout = Icout + Ibattout$. Here, the current from the first battery $Ibattout$ is essentially equal to the difference between a charging current flowing through the first and the second battery, respectively, $Ib1$, $Ib2$, such that $Ibattout = Ib2 - Ib1$.

In the equalizer circuit/voltage conversion system shown in figure 3a, as is recognized by the present invention, a current $Ibattout$ is only lead from the first battery 301 to the voltage conversion system output 304 if the amplitude of the voltage conversion system output current $Isysout$ to be delivered by the voltage conversion system is higher than approximately twice an amplitude of a maximal converter output current, i.e. if $Isysout > \alpha * Ic(max)out$, where $\alpha \approx 2$. (For the 12/12V converter, $\alpha$ is here stated to be approximately equal to two, since it is difficult to give an exact value due to the fact that this value varies with voltage and temperature.) Otherwise, the current $Ibattout$ lead from the first battery is zero, $Ibattout = 0$, and the first and the second charging currents have the same amplitude, $Ib1 = Ib2$.

Therefore, for lower values of the voltage conversion system output current $Isysout$, essentially no charging unbalance between the first and the second battery 301, 302 is created due to the 12 volt power supply, since no current is lead from just one of the batteries to the voltage conversion system output 304. Thus, the first and the second charging current are equal for lower voltage conversion system output currents, $Ib1 = Ib2$.

However, for voltage conversion system output currents being higher than approximately twice an amplitude of a maximal converter output current, $Isysout > \alpha * Ic(max)out$, where $\alpha \approx 2$, a current $Ibattout$ flows from the first battery 301 to the voltage conversion system output 304, i.e. $Ibattout \neq 0$ and therefore also the first and the second charging current are not equal, $Ib1 \neq Ib2$. The first and the second battery 301, 302 will therefore, after a period of time, have an unbalance in their charging levels, respectively, due to the 12 volt power supply.

Thus, according to the present invention, due to a need for a higher voltage conversion system output current $Isysout$ than the converter 303 can deliver, the first battery 301 is, for a period of time, charged by a first charging current $Ib1$ being smaller than a second charging current $Ib2$ being used for charging the second battery 302. Therefore, after this period of time, the first battery 301 has a charging level being lower than the charging level for the second battery 302. The period of time for which the first and the second charging currents are not equal, i.e. $Ib1 \neq Ib2$, essentially corresponds with the time for which the amplitude of the voltage conversion system output current is higher than approximately twice an amplitude of a maximal converter output current, i.e. for

which $Isysout > \alpha * Ic(max)out$, where $\alpha \approx 2$,.

According to the present invention, the relationships between the voltage conversion system output current $Isysout$, the first and the second charging currents $Ib1$, $Ib2$, and the possible unbalance between the first and the second battery are utilized, as is described in the following.

According to the invention, the amplitude of the voltage conversion system output current $Isysout$ is used for determining if a battery unbalance is present at all, by performing a comparison of the amplitude of the voltage conversion system output current $Isysout$ with the maximal converter output current $Ic(max)out$. According to the present invention, a battery unbalance is determined to be present in the embodiment of the invention shown in figure 3a if the voltage conversion system output current $Isysout$ is higher than approximately twice an amplitude of the maximal converter output current, i.e. for which $Isysout > \alpha * Ic(max)out$, where $\alpha \approx 2$.

To determine a battery unbalance based on conversion circuit output current $Isysout$ has the advantage that a very correct and efficient detection of unbalance between the batteries is achieved.

If a battery unbalance is determined to be present, each of the first and the second battery 301, 302 has to be charged with a certain first and second charging currents $Ib1$, $Ib2$, respectively, in order to restore the balance between the batteries. At least one of these certain first and second charging currents to be used for charging the first and the second battery 301, 302, respectively, is, according to the present invention, determined based on the amplitude of the charging currents which have been used for the first and the second battery 301, 302, respectively, during the period of time for which the amplitude of the first charging current $Ib1$ was smaller than the amplitude of the second charging current $Ib2$, i.e. for the period of time for which the voltage conversion system output current was higher than approximately twice the amplitude of the maximal converter output current.

Thus, the certain first and second charging currents $Ib1$, $Ib2$ to be used for charging the first and the second battery 301, 302, respectively, from a moment in time and on, is determined based on a period of time before that moment in time, for which period of time a battery unbalance has been determined present. Note that one of the first and the second charging current can have an amplitude equal to zero for the case that only one of the batteries need to be charged.

According to an embodiment of the present invention, at least one of the first and the second charging current $Ib1$, $Ib2$ to be used for charging the first and the second battery 301, 302, respectively, from a moment on, is determined based on a difference in amplitude for the first and the second charging current $Ib1$, $Ib2$. In particular, the difference in amplitude for the first and the second charging current $Ib1$, $Ib2$, during the time for which the voltage conversion system output current is higher than approximately twice the amplitude of the maximal converter output current, is used for the determination.

According to an embodiment of the present invention, an amount of electrical charge $Q$ to be supplied to the battery having had the smallest charging current during this period of time, i.e. here to the first battery 301, is determined by calculating an integral, over this period of time, for the difference in amplitude between the first and the second charging current $Ib1$, $Ib2$, according to the equation:

$$ Q = \int_{t1}^{t2} (Ib2 - Ib1)dt \, , $$

where $t1$ and $t2$ are moments in time for start and end, respectively, of the time period for which the voltage conversion system output current is higher than approximately twice an amplitude of the maximal converter output current, i.e. for which $Isysout > \alpha * Ic(max)out$, where $\alpha \approx 2$.

Further, according to an embodiment of the present invention, the determined amount of electrical charge $Q$ is then transferred to the first battery 301, in order to restore the battery balance. By this way of determining the electric charge $Q$ to be transferred to the first battery, i.e. by determining the electrical charge from the difference between the first and the second charging currents $Ib1$, $Ib2$, the battery balance is restored quickly, since the accurate amount of electrical charge $Q$ is correctly calculated and transferred to the battery in need of it.

According to an embodiment of the present invention, this electrical charge $Q$ is transferred to the first battery by applying an essentially constant first charging current $Ib1$ to the first battery 301, where the first charging current $Ib1$ has a higher amplitude than the second charging current $Ib2$. Thus, an essentially constant first charging current $Ib1$, which is essentially independent of the voltage of the first battery 301 itself, is applied to the first battery 301.

Thus, according to an embodiment of the present invention, the currents being used for charging the first and the second battery 301, 302, are controlled to have an essentially constant current level. To restore a battery balance by the use of such a current control, the constant current levels of the first and the second charging current $Ib1$, $Ib2$, and especially the first charging current $Ib1$, have the advantage that the first and the second charging current $Ib1$, $Ib2$ flowing through the first and the second battery 301, 302 do essentially not decrease due to an increasing voltage of the batteries themselves (as was the case in prior art voltage based methods). Therefore, a much more efficient (and thereby faster), and more predictable charging of the batteries is achieved, as compared to the voltage based charging methods of the prior art.

Above, the present invention has been described for an embodiment of an equalizer circuit having a 12/12V converter being connected to the second battery 302. However, the basic idea of the present invention is applicable on essentially any equalizer circuit. Thus, according to an embodiment of the present invention, the input of the 12/12V converter is connected to the first battery 301. Also, to exemplify the equalizer circuit, it has above been stated that the first and second batteries 301, 302 are 12 volt batteries. However, the present invention is also applicable to voltage conversion systems using batteries of essentially any voltage.

Further, the voltage conversion system according to the present invention shown in figure 3b differs essentially from the embodiment shown in figure 3a in that the converter 303 is a 24/12V converter being connected over the series connected first and second batteries 301, 302. The converter 303 further has a converter input voltage $Vcin$ of 24 volt and a converter input current $Icin,$ and produces a converter output voltage $Vcout,$ having a 12 volt voltage level, and a converter output current $Icout.$ Otherwise, the voltage conversion system according to this embodiment has the same configuration as the voltage conversion system shown in figure 3a.

In the embodiment shown in figure 3b, a current $Ibattout$ is only lead from the first battery 301 to the voltage conversion system output 304 if the amplitude of the voltage conversion system output current $Isysout$ to be delivered by the voltage conversion system is higher than approximately the amplitude of the maximal converter output current, i.e. if $Isysout > \alpha * Ic(max)out,$ where $\alpha \approx$ 1. (For the 24/12V converter, $\alpha$ is here stated to be approximately equal to one, since it is difficult to give an exact value for $\alpha$, due to the fact that this value varies with voltage and temperature.)

Determination of unbalance and restoring balance is, according to this embodiment, performed in accordance with what is described above for the embodiment shown in figure 3a, but with the difference that unbalance occurs when the amplitude of the voltage conversion system output current $Isysout$ to be delivered by the voltage conversion system is higher than approximately the amplitude of the maximal converter output current, i.e. if $Isysout > \alpha * Ic(max)out,$ where $\alpha \approx 1$.

Thus, a battery unbalance is determined to be present if the voltage conversion system output current is higher than approximately the amplitude of the maximal converter output current. In this way, a very correct and efficient detection of unbalance between the batteries is achieved.

At least one of the certain first and second charging currents to be used for charging the first and the second battery 301, 302, respectively, to restore battery balance are determined based on the amplitude of the charging currents which have been used for the first and the second battery 301, 302, respectively, during the period of time for which the first charging current $Ib1$ was smaller than the second charging current $Ib2$. In particular, at least one of the first and the second charging current $Ib1, Ib2$ to be used for charging the first and the second battery 301, 302, respectively, from one moment and on, is determined based on a difference in amplitude for the first and the second charging current $Ib1, Ib2$ having been used for a time period before that moment in time.

According to an embodiment of the present invention, an amount of electrical charge $Q$ to be supplied to the battery having had the smallest charging current during this period of time is determined by calculating an integral over the period of time for the difference in amplitude between the first and the second charging currents $Ib1, Ib2$, according to:

$$Q = \int_{t1}^{t2} (Ib2 - Ib1)dt ,$$

where $t1$ and $t2$ are moments in time for start and end, respectively, of the time period for which the voltage conversion system output current is higher than approximately the amplitude of the maximal converter output current, i.e. for which $Isysout > \alpha * Ic(max)out,$ where $\alpha \approx 1$. By this way of determining the electric charge $Q$ to be transferred to the first battery, the battery balance is restored quickly.

According to an embodiment of the present invention, this electrical charge $Q$ is transferred to the first battery by applying an essentially constant first charging current $Ib1$ to it. Therefore, a very efficient and predictable charging of the batteries is achieved.

Above, in connection with the embodiment of the present invention illustrated in figure 3b, the embodiment has for illustrative reasons been exemplified by the first and second battery being 12 volt batteries. However, as was stated above, the present invention is also applicable to voltage conversion systems using batteries having essentially any voltage.

Further, according to another embodiment of the present invention, the voltage conversion system output 304 is connected to the second battery 302. According to this embodiment, an unbalance in the charging levels of the first and the second battery 301, 302 is caused by a current $Ibattout$ being lead from the second battery 302, such that the first and the second charging current $Ib1, Ib2$ have differing amplitudes. Thus, the voltage conversion system output 304 is here connected such that the voltage conversion system output current $Isysout$ is composed of the converter output current $Icout$ and a current $Ibattout$ flowing from the second battery 302, when an amplitude of the voltage conversion system output current is higher than approximately twice the amplitude of the of the maximal converter output current, for the 12/12V converter configuration, or is higher than approximately the amplitude of the maximal converter output current, for the 24/12V converter configuration . The

first charging current $Ib1$ is here higher than the second charging current $Ib2$ during unbalance, i.e. $Ibattout = Ib1 - Ib2$.

For this embodiment, the determination of battery level unbalance as well as the determination of the first and the second charging current $Ib1, Ib2$ to be used for restoring battery balance, are performed correspondingly to what was described above for the embodiments shown in figure 3a and 3b. However, for this embodiment, the balance is here restored by applying a second charging current $Ib2$ to the second battery 302 having a higher amplitude than the first charging current $Ib1$ being applied to the first battery 301.

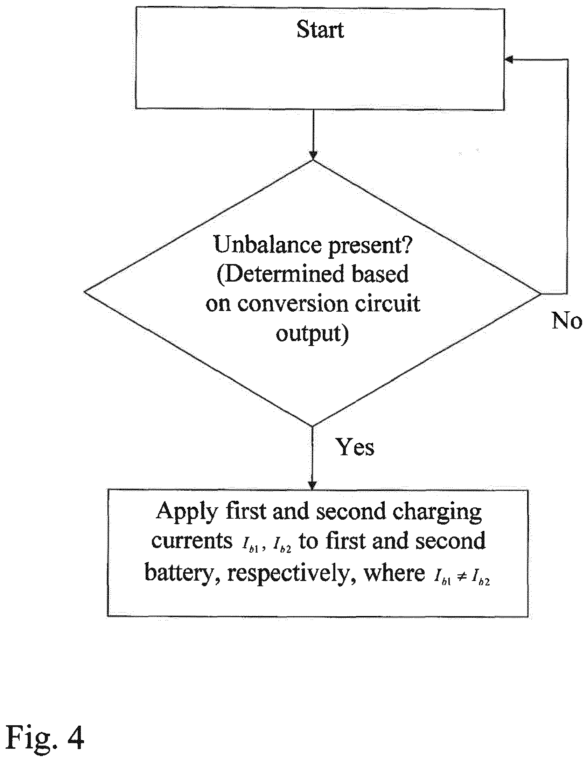

Figure 4 shows a flow diagram for the basic method of the present invention. In a first step of the method, it is determined if a battery unbalance is present in the voltage conversion system. This determination is performed based on the voltage conversion system output current $Isysout$. If there is no battery unbalance present, the method returns back to the starting point again. If there is battery unbalance present, the method proceeds to the second step of the method. In the second step, a first charging current $Ib1$ is applied to the first battery and a second charging current $Ib2$ is applied to the second battery, where each of the first and the second charging current $Ib1, Ib2$ is different from the other, i.e. $Ib1 \neq Ib2$.

Further, the method of the invention can be implemented by a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Further, as is realized by a person skilled in the art, the methods and apparatus of the present invention is applicable to essentially any voltage supplying system supplying different levels of voltage for different loads. Such systems may be implemented in, for example, any type of vehicles, vessels (such as boats and ships), and the like. This invention is not limited to the use of two 12 volt batteries. The present invention can, as is apparent to a skilled person, be implemented using essentially any number of batteries, where the batteries may have essentially any voltage. Thus, the method and apparatus according to the invention may be modified by those skilled in the art, as compared to the exemplary embodiments described above.

### Claims

1. Method for battery unbalance mitigation in a voltage conversion system, said voltage conversion system including:

   - a first (301) and a second (302) battery being connected in series with each other,
   - a converter (303) having a converter input and a converter output, said converter input being connected to at least one of said first (301) and said second (302) battery in such a way that the voltage at the converter input is either the voltage of the first battery or the voltage of the second battery or the sum of both the voltages of the first and the second battery, said converter output providing a converter output current and a converter output voltage, said converter having a maximal converter output current ($Ic(max)out$), and
   - a voltage conversion system output (304), being connected to a point between said first (301) and said second (302) battery and to said converter output, providing a voltage conversion system output current ($Isysout$), the method comprising
   - detecting a battery unbalance in said voltage conversion system;
   - applying, when battery unbalance is detected, a first charging current ($Ib1$) to said first battery and a second charging current ($Ib2$) to said second battery for restoring a charging balance of said first (301) and said second (302) battery, the method being **characterized in that**:

     - said detecting of battery unbalance in said voltage conversion system comprises the step of performing a comparison of said voltage conversion system output current ($Isysout$) with said maximal converter output current ($Ic(max)out$),
     - said first and second charging currents for restoring the charging balance are determined based on a period of time during which battery unbalance has been detected to be present, and based on the amplitude of the first ($Ib1$) and second ($Ib2$) charging currents which have been used for charging the first and the second battery during said period of time, and
     - said first and said second charging current ($Ib1$), ($Ib2$) being different from each other, wherein the one of said first ($Ib1$) and said second ($Ib2$) charging current being the highest is applied to the one of said first and said second battery having had the smallest charging current during said period of time.

2. Method as claimed in claim 1, **characterized in that** said converter (303) is arranged for converting a first voltage to a second voltage, said first and said second voltage having approximately the same amplitude, and said converter input being connected to one of said first (301) and said second (302) battery, wherein said battery unbalance is determined to be present if an amplitude of said voltage conversion system output current ($Isysout$) is higher than approximately twice the amplitude of a maximal converter output current ($Ic(\max)out$) for said converter, $Isysout > \alpha * Ic(\max)out$, where $\alpha \approx 2$.

3. Method as claimed in claim 1, **characterized in that** said converter is arranged for converting a first voltage to a second voltage, said first voltage having approximately twice the amplitude of said second voltage, and said converter input being connected to the series connected said first (301) and said second (302) battery, wherein said battery unbalance is determined to be present if an amplitude of said voltage conversion system output current ($Isysout$) is higher than approximately the amplitude of a maximal converter output current ($Ic(\max)out$) for said converter, $Isysout > \alpha * Ic(\max)out$, where $\alpha \approx 1$.

4. Method as claimed in any one of claims 1 to 3, **characterized in that** an amplitude of at least one of said first and said second charging current ($Ib1$), ($Ib2$) to be used for charging said first (301) and said second (302) battery, respectively, from a time instant on, is determined based on an amplitude of said first and said second charging current ($Ib1$), ($Ib2$) having been used for charging said first (301) and said second (302) battery, respectively, during a period of time before said time instant.

5. Method as claimed in claim 4, **characterized in that** an integral over said period of time is calculated for a difference in amplitude between said first and said second charging current ($Ib1$), ($Ib2$) having been used during said period of time, whereby an amount of electric charge $Q$ to be used for charging said one of said first (301) and said second (302) battery being connected to said voltage conversion system output (304) is based on the integral calculation.

6. Method as claimed in any one of claims 4 and 5, **characterized in that** said converter (303) is arranged for converting a first voltage to a second voltage, said first and said second voltage having approximately the same amplitude, and said converter input being connected to one of said first (301) and said second (302) battery, wherein said period of time is based on the time for which an amplitude of said voltage conversion system output current ($Isysout$) is higher than approximately twice the amplitude of a maximal converter output current ($Ic(\max)out$) for said converter, $Isysout > \alpha * Ic(\max)out$, where $\alpha \approx 2$.

7. Method as claimed in any one of claims 4 and 5, **characterized in that** said converter (303) is arranged for converting a first voltage to a second voltage, said first voltage having approximately twice the amplitude of said second voltage, and said converter input being connected to the series connected said first (301) and said second (302) battery, wherein said period of time is based on the time for which an amplitude of said voltage conversion system output current ($Isysout$) is higher than approximately the amplitude of a maximal converter output current ($Ic(\max)out$) for said converter, $Isysout > \alpha * Ic(\max)out$, where $\alpha \approx 1$.

8. Method as claimed in any one of claims 2 and 6, **characterized in that** said first voltage is 12 volt, and **in that** said second voltage is 12 volt.

9. Method as claimed in any one of claims 3 and 7, **characterized in that** said first voltage is 24 volt, and **in that** said second voltage is 12 volt.

10. Computer program, **characterised in** code means, which when run in a control unit causes the control unit to execute the method according to any of the claims 1-9.

11. Computer program product including a computer readable medium and a computer program according to claim 10, wherein said computer program is included in the computer readable medium.

12. Computer program product according to claim 11, **characterised in that** said computer readable medium consists of one or more from the group: ROM (Read-Only Memory), PROM (Programmable Read-Only Memory), EPROM (Erasable PROM), Flash memory, EEPROM (Electrically Erasable PROM).

13. A voltage conversion system including:

- a first (301) and a second (302) battery being connected in series with each other,
- a converter (303) having a converter input and a converter output, said converter input being connected to at least one of said first (301) and said second (302) battery in such a way that the voltage at the converter input is either the voltage of the first battery or the voltage of the second battery or the sum of both the voltages of the first and the second battery, said converter output providing a converter output current and a converter output voltage, said converter having a maximal converter output current ($Ic(\max)out$), and
- a voltage conversion system output (304) being connected to a point between said first (301) and said second (302) battery, and to said converter output, thereby producing a voltage conversion system output current (*Isysout*),

- a determination entity, being arranged for applying, when battery unbalance is detected , a first charging current (*Ib*1) to said first battery and a second charging current (*Ib*2) to said second battery for restoring a charging balance of said first and second batteries,

**characterized by**

the determination entity being arranged to perform said detecting of battery unbalance in said voltage conversion system by a comparison of said voltage conversion system output current (*Isysout*) with said maximal converter output current (*Ic*(max)*out*),

- the determination entity being arranged to determine said first and second charging currents for restoring the charging balance based on a period of time during which battery unbalance has been detected to be present, and based on the amplitude of the first (*Ib*1) and second ( *Ib*2) charging currents which have been used for charging the first and the second battery during said period of time, and
- a charging entity arranged to apply said first and said second charging current (*Ib*1), (*Ib*2) being different from each other, wherein the one of said first (*Ib*1) and said second (*Ib*2) charging current being the highest is applied to the one of said first and said second battery having had the smallest charging current during said period of time.

14. The voltage conversion system as claimed in claim 13, **characterized in that** said converter (303) is arranged for converting a first voltage to a second voltage, said first and said second voltage having approximately the same amplitude, and said converter input being connected to one of said first (301) and said second (302) battery, wherein said voltage conversion system is arranged to determine that a battery unbalance for said first (301) and said second (302) battery is present if an amplitude of said voltage conversion system output current (*Isysout*) is higher than approximately twice the amplitude of a maximal converter output current (*Ic*(max)*out*) for said converter, *Isysout* > $\alpha$ * *Ic*(max)*out*, where $\alpha \approx 2$.

15. The voltage conversion system as claimed in claim 14, **characterized in that** said first voltage is 12 volt, and **in that** said second voltage is 12 volt.

16. The voltage conversion system as claimed in claim 13, **characterized in that** said converter (303) is arranged for converting a first voltage to a second voltage, said first voltage having approximately twice the amplitude of said second voltage, and said converter input being connected to the series connected said first (301) and said second (302) battery, wherein said voltage conversion system is arranged to determine that a battery unbalance for said first (301) and said second (302) battery is present if an amplitude of said voltage conversion system output current (*Isysout*) is higher than approximately the amplitude of a maximal converter output current (*Ic*(max)*out*) for said converter, *Isysout* > $\alpha$ * *Ic*(max)*out*, where $\alpha \approx 1$.

17. The voltage conversion system as claimed in claim 16, **characterized in that** said first voltage is 24 volt, and **in that** said second voltage is 12 volt.

18. The voltage conversion system as claimed in any one of claims 13 to 17, **characterized in that** said voltage conversion system is arranged to determine an amplitude of at least one of said first and said second charging current (*Ib*1), (*Ib*2) to be used for charging said first (301) and said second (302) battery, respectively, from a time instant on, based on an amplitude of said first and said second charging current (*Ib*1), (*Ib*2) having been used for charging said first (301) and said second (302) battery, respectively, during a period of time before said time instant.

19. A vehicle **characterized in that** it includes a voltage conversion system as the one claimed in any one of claims 13-18.

**Patentansprüche**

1. Verfahren zur Abschwächung der Batterieungleichheit in einem Spannungswandlungssystem, wobei das Spannungswandlungssystem umfasst:

- eine erste (301) und eine zweite (302) Batterie, die in Reihe miteinander geschaltet sind,
- einen Wandler (303) mit einem Wandlereingang und einem Wandlerausgang, wobei der Wandlereingang mit mindestens entweder der ersten (301) oder der zweiten (302) Batterie so verbunden ist, dass die Spannung am Wandlereingang entweder die Spannung der ersten Batterie oder die Spannung der zweiten Batterie oder die Summe beider Spannungen der ersten und der zweiten Batterie ist, wobei der Wandlerausgang einen Wandlerausgangsstrom und eine Wandlerausgangsspannung bereitstellt, wobei der Wandler einen maximalen Wandlerausgangsstrom (*Ic(max)out*) hat, und
- ein Spannungswandlungssystemausgang (304), der mit einem Punkt zwischen der ersten (301) und der zweiten (302) Batterie und mit dem einen Ausgangsstrom *(Isysout)* des Spannungswandlungssystems bereitstellenden Wandlerausgang verbunden ist, wobei das Verfahren aufweist

- Detektieren einer Batterieungleichheit in dem Spannungswandlungssystem;

- wenn eine Batterieungleichheit detektiert wird, Anlegen eines ersten Ladestroms ($Ib1$) an die erste Batterie und eines zweiten Ladestroms ($Ib2$) an die zweite Batterie zur Wiederherstellung einer Ladegleichheit der ersten (301) und der zweiten (302) Batterie,

wobei das Verfahren **dadurch gekennzeichnet ist, dass**

- die Detektion der Batterieungleichheit in dem Spannungswandlungssystem den Schritt der Ausführung eines Vergleichs des Ausgangsstroms ($Isysout$) des Spannungswandlungssystems mit dem maximalen Wandlerausgangsstrom ($Ic(max)out$) aufweist,

- der erste und der zweite Ladestrom zur Wiederherstellung der Ladegleichheit auf Basis einer Zeitspanne bestimmt werden, während der das Vorliegen der Batterieungleichheit detektiert worden ist, und auf Basis der Amplitude des ersten ($Ib1$) und des zweiten ($Ib2$) Ladestroms, mit denen die erste und die zweite Batterie während dieser Zeitspanne aufgeladen worden sind, und

- der erste und der zweite Ladestrom ($Ib1$), ($Ib2$) voneinander verschieden sind, wobei entweder der erste ($Ib1$) oder der zweite ($Ib2$) Ladestrom als der höchste Ladestrom an entweder die erste oder die zweite Batterie mit dem während dieser Zeitspanne niedrigsten Ladestrom gelegt wird.

2. Verfahren nach Anspruch 1,
   **dadurch gekennzeichnet, dass** der Wandler (303) zum Wandeln einer ersten Spannung in eine zweite Spannung eingerichtet ist, wobei die erste und die zweite Spannung ungefähr die gleiche Amplitude haben, und wobei der Wandlereingang entweder mit der ersten (301) oder der zweiten (302) Batterie verbunden ist, wobei die Batterieungleichheit als vorhanden bestimmt wird, wenn eine Amplitude des Ausgangsstroms ($Isysout$) des Spannungswandlungssystems höher ist als ca. das Zweifache der Amplitude eines maximalen Wandlerausgangsstroms ($Ic(max)out$) des Wandlers; $Isysout > \alpha * Ic(max)out,$ wobei $\alpha \sim 2$.

3. Verfahren nach Anspruch 1,
   **dadurch gekennzeichnet, dass** der Wandler zum Wandeln einer ersten Spannung in eine zweite Spannung eingerichtet ist, wobei die erste Spannung ungefähr die zweifache Amplitude der zweiten Spannung hat, und wobei der Wandlereingang in Reihe mit der ersten (301) und der zweiten (302) Batterie geschaltet ist, wobei die Batterieungleichheit als vorhanden bestimmt wird, wenn eine Amplitude des Ausgangsstroms ($Isysout$) des Spannungswandlungssystems höher ist als ca. die Amplitude eines maximalen Wandlerausgangsstroms ($Ic(max)out$) des Wandlers; $Isysout > \alpha * Ic(max)out,$ wobei $\alpha \sim 1$.

4. Verfahren nach einem der Ansprüche 1 bis 3,
   **dadurch gekennzeichnet, dass** eine Amplitude mindestens eines des ersten und des zweiten Ladestroms ($Ib1$), ($Ib2$), die zum Laden der ersten (301) bzw. der zweiten (302) Batterie ab einem Zeitpunkt verwendet werden, auf Basis einer Amplitude des ersten und des zweiten Ladestroms ($Ib1$), ($Ib2$) bestimmt wird, die zum Laden der ersten (301) bzw. der zweite (302) Batterie während einer Zeitspanne vor diesem Zeitpunkt verwendet worden sind.

5. Verfahren nach Anspruch 4,
   **dadurch gekennzeichnet, dass** ein Integral über die Zeitspanne für eine Differenz der Amplituden zwischen dem ersten und dem zweiten Ladestrom ($Ib1$), ($Ib2$) berechnet wird, die während dieser Zeitspanne verwendet wurden, wobei der Betrag der elektrischen Ladung $Q$ zum Laden der mit dem Ausgang (304) des Spannungswandlungssystems verbundenen ersten (301) und der zweiten (302) Batterie auf der Berechnung des Integrals basiert.

6. Verfahren nach einem der Ansprüche 4 und 5,
   **dadurch gekennzeichnet, dass** der Wandler (303) zum Wandeln einer ersten Spannung in eine zweite Spannung eingerichtet ist, wobei die erste und die zweite Spannung ungefähr die gleiche Amplitude haben, wobei die Zeitspanne auf der Zeit basiert, während der eine Amplitude des Ausgangsstroms ($Isysout$) des Spannungswandlungssystems höher ist als ca. das Zweifache der Amplitude eines maximalen Wandlerausgangsstroms ($Ic(max)out$) des Wandlers; $Isysout > \alpha * Ic(max)out,$ wobei $\alpha \sim 2$.

7. Verfahren nach einem der Ansprüche 4 und 5,
   **dadurch gekennzeichnet, dass** der Wandler (303) zum Wandeln einer ersten Spannung in eine zweite Spannung eingerichtet ist, wobei die erste Spannung ungefähr die zweifache Amplitude der zweiten Spannung hat, und wobei der Wandlereingang in Reihe mit der ersten (301) und der zweiten (302) Batterie geschaltet ist, wobei die Zeitspanne auf der Zeit basiert, während der eine Amplitude des Ausgangsstroms ($Isysout$) des Spannungswandlungssystems höher ist als ca. die Amplitude eines maximalen Wandlerausgangsstroms ($Ic(max)out$) des Wandlers; $Isysout > \alpha * Ic(max)out,$ wobei $\alpha \sim 1$.

8. Verfahren nach einem der Ansprüche 2 und 6,
   **dadurch gekennzeichnet, dass** die erste Spannung 12 V und die zweite Spannung 12 V beträgt.

**9.** Verfahren nach einem der Ansprüche 3 und 7, **dadurch gekennzeichnet, dass** die erste Spannung 24 V und die zweite Spannung 12 V beträgt.

**10.** Computerprogramm, **gekennzeichnet durch** Codemittel, die bei Ablauf in einer Steuereinheit die Steuereinheit veranlassen, das Verfahren nach einem der Ansprüche 1 bis 9 auszuführen.

**11.** Computerprogrammprodukt mit einem computerlesbaren Medium und einem Computerprogramm nach Anspruch 10, wobei das Computerprogramm in dem computerlesbaren Medium enthalten ist.

**12.** Computerprogrammprodukt nach Anspruch 11, **dadurch gekennzeichnet, dass** das computerlesbare Medium aus einem oder mehreren der folgenden Gruppe besteht: ROM (Festwertspeicher), PROM (programmierbarer Festwertspeicher), EPROM (löschbarer PROM), Flash-Speicher, EEPROM (elektrisch löschbarer PROM).

**13.** Spannungswandlungssystem, mit:

- einer ersten (301) und einer zweiten (302) Batterie, die in Reihe miteinander geschaltet sind,
- einem Wandler (303) mit einem Wandlereingang und einem Wandlerausgang, wobei der Wandlereingang mit mindestens entweder der ersten (301) oder der zweiten (302) Batterie so verbunden ist, dass die Spannung am Wandlereingang entweder die Spannung der ersten Batterie oder die Spannung der zweiten Batterie oder die Summe beider Spannungen der ersten und der zweiten Batterie ist, wobei der Wandlerausgang einen Wandlerausgangsstrom und eine Wandlerausgangsspannung bereitstellt, wobei der Wandler einen maximalen Wandlerausgangsstrom ($Ic(max)out$) hat, und
- einem Spannungswandlungssystemausgang (304), der mit einem Punkt zwischen der ersten (301) und der zweiten (302) Batterie und mit dem Wandlerausgang verbunden ist, wodurch einen Ausgangsstrom ($Isysout$) des Spannungswandlungssystems erzeugt wird,
- einer Bestimmungseinheit, die bei Detektieren einer Batterieungleichheit eingerichtet ist, einen ersten Ladestrom ($Ib1$) an die erste Batterie und einen zweiten Ladestrom ($Ib2$) an die zweite1 Batterie zur Wiederherstellung einer Ladegleichheit der ersten (301) und der zweiten (302) Batterie zu legen,
**dadurch gekennzeichnet ist, dass** die Bestimmungseinheit zur Detektion der Batterieungleichheit im Spannungswandlungssystem durch einen Vergleich des Ausgangsstroms ($Isysout$) des Spannungswandlungssystems mit dem maximalen Wandlerausgangsstrom

($Ic(max)out$) eingerichtet ist,
- die Bestimmungseinheit dazu eingerichtet ist, den ersten und den zweiten Ladestrom zur Wiederherstellung der Ladegleichheit auf Basis einer Zeitspanne zu bestimmen, während der das Vorliegen der Batterieungleichheit detektiert worden ist, und auf Basis der Amplitude des ersten ($Ib1$) und des zweiten ($Ib2$) Ladestroms, mit denen die erste und die zweite Batterie während dieser Zeitspanne aufgeladen worden sind, und
- eine Ladeeinheit dazu eingerichtet ist, den ersten und den zweiten Ladestrom ($Ib1$), ($Ib2$), die voneinander verschieden sind, anzulegen, wobei entweder der erste ($Ib1$) oder der zweite ($Ib2$) Ladestrom als der höchste Ladestrom an entweder die erste oder die zweite Batterie mit dem während dieser Zeitspanne niedrigsten Ladestrom gelegt wird.

**14.** Spannungswandlungssystem nach Anspruch 13, **dadurch gekennzeichnet, dass** der Wandler (303) zum Wandeln einer ersten Spannung in eine zweite Spannung eingerichtet ist, wobei die erste und die zweite Spannung ungefähr die gleiche Amplitude haben, und der Wandlereingang entweder mit der ersten (301) oder der zweite (302) Batterie verbunden ist, wobei das Spannungswandlungssystem eingerichtet ist, zu bestimmen, dass eine Batterieungleichheit zwischen der ersten (301) und der zweiten (302) Batterie vorliegt, wenn eine Amplitude des Ausgangsstroms ($Isysout$) des Spannungswandlungssystems höher ist als ca. das Zweifache der Amplitude eines maximalen Wandlerausgangsstroms ($Ic(max)out$) des Wandlers; $Isysout > \alpha * Ic(max)out$, wobei $\alpha \sim 2$.

**15.** Spannungswandlungssystem nach Anspruch 14, **dadurch gekennzeichnet, dass** die erste Spannung 12 V und die zweite Spannung 12 V beträgt.

**16.** Spannungswandlungssystem nach Anspruch 13, **dadurch gekennzeichnet, dass** der Wandler (303) zum Wandeln einer ersten Spannung in eine zweite Spannung eingerichtet ist, wobei die erste Spannung ungefähr die zweifache Amplitude der zweiten Spannung hat, und wobei der Wandlereingang in Reihe mit der ersten (301) und der zweiten (302) Batterie geschaltet ist, wobei das Spannungswandlungssystem wobei das Spannungswandlungssystem eingerichtet ist, zu bestimmen, dass eine Batterieungleichheit zwischen der ersten (301) und der zweiten (302) Batterie vorliegt, wenn eine Amplitude des Ausgangsstroms ($Isysout$) des Spannungswandlungssystems höher ist als ca. die Amplitude eines maximalen Wandlerausgangsstroms ($Ic(max)out$) des Wandlers; $Isysout > \alpha * Ic(max)out$, wobei $\alpha \sim 1$.

**17.** Spannungswandlungssystem nach Anspruch 16, **dadurch gekennzeichnet, dass** die erste Spannung 24 V und die zweite Spannung 12 V beträgt.

**18.** Spannungswandlungssystem nach einem der Ansprüche 13 bis 17, **dadurch gekennzeichnet, dass** das Spannungswandlungssystem eingerichtet ist, zu bestimmen, dass eine Amplitude mindestens eines des ersten und des zweiten Ladestroms (*Ib*1), (*Ib*2), die zum Laden der ersten (301) bzw. der zweiten (302) Batterie ab einem Zeitpunkt verwendet werden, auf Basis einer Amplitude des ersten und des zweiten Ladestroms (*Ib*1), (*Ib*2) bestimmt wird, die zum Laden der ersten (301) bzw. der zweite (302) Batterie während einer Zeitspanne vor diesem Zeitpunkt verwendet worden sind.

**19.** Fahrzeug, **dadurch gekennzeichnet, dass** es ein Spannungswandlungssystem nach einem der Ansprüche 13 bis 18 aufweist.

## Revendications

**1.** Procédé pour atténuation de déséquilibre de batteries dans un système de conversion de tension, ledit système de conversion de tension comprenant :

- une première (301) et une seconde (302) batteries qui sont connectées en série l'une à l'autre,
- un convertisseur (303) comportant une entrée de convertisseur et une sortie de convertisseur, ladite entrée de convertisseur étant connectée à au moins l'une de ladite première (301) et de ladite seconde (302) batteries de telle sorte que la tension à l'entrée du convertisseur est soit la tension de la première batterie soit la tension de la seconde batterie soit la somme des deux tensions de la première et de la seconde batteries, ladite sortie de convertisseur délivrant un courant de sortie de convertisseur et une tension de sortie de convertisseur, ledit convertisseur ayant un courant de sortie de convertisseur maximal (*Ic*(max)*out*), et
- une sortie de système de conversion de tension (304), qui est connectée à un point entre ladite première (301) et ladite seconde (302) batteries et à ladite sortie de convertisseur, délivrant un courant de sortie de système de conversion de tension (*Isysout*), le procédé comprenant :
- la détection d'un déséquilibre de batteries dans ledit système de conversion de tension ;
- l'application, lorsqu'un déséquilibre de batteries est détecté, d'un premier courant de charge (*Ib*1) à ladite première batterie, et d'un second courant de charge (*Ib*2) à ladite seconde batterie, afin de rétablir un équilibre de charge de ladite première (301) et de ladite seconde (302) batteries, le procédé étant **caractérisé en ce que** :

- ladite détection de déséquilibre de batteries dans ledit système de conversion de tension comprend l'étape de réalisation d'une comparaison dudit courant de sortie de système de conversion de tension (*Isysout*) avec ledit courant de sortie de convertisseur maximal (*Ic*(max)*out*),
- lesdits premier et second courants de charge pour rétablir l'équilibre de charge sont déterminés en fonction d'une période de temps durant laquelle un déséquilibre de batteries a été détecté comme étant présent, et en fonction de l'amplitude des premier (*Ib*1) et second (*Ib*2) courants de charge qui ont été utilisés pour charger la première et la seconde batteries durant ladite période de temps, et
- ledit premier et ledit second courants de charge (*Ib*1), (*Ib*2) étant différents l'un de l'autre, celui dudit premier (*Ib*1) et dudit second (*Ib*2) courants de charge qui est le plus élevé étant appliqué à celle de ladite première et de ladite seconde batteries qui a eu le plus petit courant de charge durant ladite période de temps.

**2.** Procédé selon la revendication 1, **caractérisé en ce que** ledit convertisseur (303) est configuré de façon à convertir une première tension en une seconde tension, ladite première et ladite seconde tensions ayant approximativement la même amplitude, et ladite entrée de convertisseur étant connectée à l'une de ladite première (301) et de ladite seconde (302) batteries, ledit déséquilibre de batteries étant déterminé comme étant présent si une amplitude dudit courant de sortie de système de conversion de tension (*Isysout*) est supérieure à approximativement deux fois l'amplitude d'un courant de sortie de convertisseur maximal (*Ic*(max)*out*) pour ledit convertisseur, $Isysout > \alpha * Ic(\max)out$, où $\alpha \approx 2$.

**3.** Procédé selon la revendication 1, **caractérisé en ce que** ledit convertisseur est configuré de façon à convertir une première tension en une seconde tension, ladite première tension ayant approximativement deux fois l'amplitude de ladite seconde tension, et ladite entrée de convertisseur étant connectée à la série connectée de ladite première (301) et de ladite seconde (302) batteries, ledit déséquilibre de batteries étant déterminé comme étant présent si une amplitude dudit courant de sortie de système de conversion de tension (*Isysout*) est supérieure à approximativement l'amplitude d'un courant de sortie de convertisseur maximal (*Ic*(max)*out*) pour ledit convertisseur, *Isysout* > α * *Ic*(max)*out*, où α ≈ *1.*

4. Procédé selon l'une quelconque des revendications 1 à 3, **caractérisé en ce qu'**une amplitude d'au moins l'un dudit premier et dudit second courants de charge (*Ib*1)*, (Ib*2) devant être utilisés pour charger ladite première (301) et ladite seconde (302) batteries, respectivement, à partir d'un instant dans le temps en service, est déterminée en fonction d'une amplitude dudit premier et dudit second courants de charge (*Ib*1)*, (Ib*2) qui ont été utilisés pour charger ladite première (301) et ladite seconde (302) batteries, respectivement, durant une période de temps avant ledit instant dans le temps.

5. Procédé selon la revendication 4, **caractérisé en ce qu'**une intégrale au cours de ladite période de temps est calculée pour une différence d'amplitude entre ledit premier et ledit second courants de charge (*Ib*1)*, (Ib*2) qui ont été utilisés durant ladite période de temps, grâce à quoi une quantité de charge électrique Q devant être utilisée pour charger ladite batterie de ladite première (301) et de ladite seconde (302) batteries qui sont connectées à ladite sortie de système de conversion de tension (304) est basée sur le calcul de l'intégrale.

6. Procédé selon l'une quelconque des revendications 4 et 5, **caractérisé en ce que** ledit convertisseur (303) est configuré de façon à convertir une première tension en une seconde tension, ladite première et ladite seconde tensions ayant approximativement la même amplitude, et ladite entrée de convertisseur étant connectée à l'une de ladite première (301) et de ladite seconde (302) batteries, ladite période de temps étant fonction du temps pendant lequel une amplitude dudit courant de sortie de système de conversion de tension (*Isysout*) est supérieure à approximativement deux fois l'amplitude d'un courant de sortie de convertisseur maximal (*Ic*(max)*out*) pour ledit convertisseur, *Isysout* > α * *Ic*(max)*out*, où α ≈ 2.

7. Procédé selon l'une quelconque des revendications 4 et 5, **caractérisé en ce que** ledit convertisseur (303) est configuré de façon à convertir une première tension en une seconde tension, ladite première tension ayant approximativement deux fois l'amplitude de ladite seconde tension, et ladite entrée de convertisseur étant connectée à la série connectée de ladite première (301) et de ladite seconde (302) batteries, ladite période de temps étant fonction du temps pendant lequel une amplitude dudit courant de sortie de système de conversion de tension (*Isysout*) est supérieure à approximativement l'amplitude d'un courant de sortie de convertisseur maximal (*Ic*(max)*out*) pour ledit convertisseur, *Isysout* > α * *Ic*(max)*out*, où α ≈ 1.

8. Procédé selon l'une quelconque des revendications 2 et 6, **caractérisé en ce que** ladite première tension est de 12 volts, et **en ce que** ladite seconde tension est de 12 volts.

9. Procédé selon l'une quelconque des revendications 3 et 7, **caractérisé en ce que** ladite première tension est de 24 volts, et **en ce que** ladite seconde tension est de 12 volts.

10. Programme informatique, **caractérisé par** des moyens formant code, qui, lorsqu'ils sont exécutés dans une unité de commande, font exécuter par l'unité de commande le procédé selon l'une quelconque des revendications 1 à 9.

11. Produit de programme informatique comprenant un support lisible par ordinateur et un programme informatique selon la revendication 10, dans lequel ledit programme informatique est inclus dans le support lisible par ordinateur.

12. Produit de programme informatique selon la revendication 11, **caractérisé en ce que** ledit support lisible par ordinateur consiste en l'une ou plusieurs parmi le groupe : ROM (mémoire morte), PROM (mémoire morte programmable), EPROM (mémoire morte programmable effaçable), mémoire flash, EEPROM (mémoire morte programmable effaçable électriquement).

13. Système de conversion de tension, comprenant :

 - une première (301) et une seconde (302) batteries, qui sont connectées en série l'une à l'autre,
 - un convertisseur (303) comportant une entrée de convertisseur et une sortie de convertisseur, ladite entrée de convertisseur étant connectée à au moins l'une de ladite première (301) et de ladite seconde (302) batteries de telle sorte que la tension à l'entrée du convertisseur est soit la tension de la première batterie, soit la tension de la seconde batterie soit la somme des deux tensions de la première et de la seconde batteries, ladite sortie de convertisseur délivrant un courant de sortie de convertisseur et une tension de sortie de convertisseur, ledit convertisseur ayant un courant de sortie de convertisseur maximal (*Ic*(max)*out*), et
 - une sortie de système de conversion de tension (304) qui est connectée à un point entre ladite première (301) et ladite seconde (302) batteries, et à ladite sortie de convertisseur, de façon à produire ainsi un courant de sortie de système de conversion de tension (*Isysout*),
- une entité de détermination, qui est configurée de façon à appliquer, lorsqu'un déséquilibre de batteries est détecté, un premier courant de charge (*Ib*1) à ladite première batterie, et un second courant de charge (*Ib*2) à ladite seconde batterie, afin de rétablir un équilibre de charge desdites première et deuxième batteries, **caractérisé en ce que** :

l'entité de détermination est configurée de façon à effectuer ladite détection de déséquilibre de batteries dans ledit système de conversion de tension par une comparaison dudit courant de sortie de système de conversion de tension (*Isysout*) avec ledit courant de sortie de convertisseur maximal (*Ic*(max)*out*),

- l'entité de détermination étant configurée de façon à déterminer lesdits premier et second courants de charge, afin de rétablir l'équilibre de charge en fonction d'une période de temps durant laquelle un déséquilibre de batteries a été détecté comme étant présent, et en fonction de l'amplitude des premier (*Ib*1) et second (*Ib*2) courants de charge qui ont été utilisés pour charger la première et la seconde batteries durant ladite période de temps, et
- une entité de charge configurée de façon à appliquer ledit premier et ledit second courants de charge (*Ib*1), (*Ib*2), qui sont différents l'un de l'autre, celui dudit premier (*Ib*1) et dudit second (*Ib*2) courants de charge qui est le plus élevé étant appliqué à celle de ladite première et de ladite seconde batteries qui a eu le plus petit courant de charge durant ladite période de temps.

14. Système de conversion de tension selon la revendication 13, **caractérisé en ce que** ledit convertisseur (303) est configuré de façon à convertir une première tension en une seconde tension, ladite première et ladite seconde tensions ayant approximativement la même amplitude, et ladite entrée de convertisseur étant connectée à l'une de ladite première (301) et de ladite seconde (302) batteries, ledit système de conversion de tension étant configuré de façon à déterminer qu'un déséquilibre de batteries pour ladite première (301) et ladite seconde (302) batteries est présent si une amplitude dudit courant de sortie de système de conversion de tension (*Isysout*) est supérieure à approximativement deux fois l'amplitude d'un courant de sortie de convertisseur maximal (*Ic*(max)*out*) pour ledit convertisseur, *Isysout* > $\alpha$ * *Ic*(max)*out,* où $\alpha \approx 2$.

15. Système de conversion de tension selon la revendication 14, **caractérisé en ce que** ladite première tension est de 12 volts, et **en ce que** ladite seconde tension est de 12 volts.

16. Système de conversion de tension selon la revendication 13, **caractérisé en ce que** ledit convertisseur (303) est configuré de façon à convertir une première tension en une seconde tension, ladite première tension ayant approximativement deux fois l'amplitude de ladite seconde tension, et ladite entrée de convertisseur étant connectée à la série connectée de ladite première (301) et de ladite seconde (302) batteries, ledit système de conversion de tension étant configuré de façon à déterminer qu'un déséquilibre de batteries pour ladite première (301) et ladite seconde (302) batteries est présent si une amplitude dudit courant de sortie de système de conversion de tension (*Isysout*) est supérieure à approximativement l'amplitude d'un courant de sortie de convertisseur maximal (*Ic*(max)*out*) pour ledit convertisseur, *Isysout* > $\alpha$ * *Ic*(max)*out*, où $\alpha \approx 1$.

17. Système de conversion de tension selon la revendication 16, **caractérisé en ce que** ladite première tension est de 24 volts, et **en ce que** ladite seconde tension est de 12 volts.

18. Système de conversion de tension selon l'une quelconque des revendications 13 à 17, **caractérisé en ce que** ledit système de conversion de tension est configuré de façon à déterminer une amplitude d'au moins l'un dudit premier et dudit second courants de charge (*Ib*1), (*Ib*2) devant être utilisés pour charger ladite première (301) et ladite seconde (302) batteries, respectivement, à partir d'un instant dans le temps en service, en fonction d'une amplitude dudit premier et dudit second courants de charge (*Ib*1), (*Ib*2) qui ont été utilisés pour charger ladite première (301) et ladite seconde (302) batteries, respectivement, durant une période de temps avant ledit instant dans le temps.

19. Véhicule, **caractérisé en ce qu'**il comprend un système de conversion de tension tel que celui selon l'une quelconque des revendications 13 à 18.

FIG. 1

FIG. 2

FIG. 3a

FIG. 3b

Start

Unbalance present?
(Determined based
on conversion circuit
output)

No

Yes

Apply first and second charging
currents $I_{b1}$, $I_{b2}$ to first and second
battery, respectively, where $I_{b1} \neq I_{b2}$

Fig. 4

**EP 2 289 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6271645 B
- US 4479083 A